# EUROPEAN PATENT SPECIFICATION

(11) **EP 1 956 842 B1**
(45) Date of publication and mention of the grant of the patent: **02.01.2019**
(21) Application number: 06804912.1
(22) Date of filing: 11.10.2006
(51) Int. Cl.: H04N 7/173

(54) **A METHOD, A DEVICE AND A SYSTEM FOR REALIZING TIME SHIFT TV**
VERFAHREN, EINRICHTUNG UND SYSTEM ZUR REALISIERUNG VON ZEITVERSCHIEBUNGS-TV
PROCEDE, DISPOSITIF ET SYSTEME DE REALISATION D'UNE TV A DECALAGE

(30) Priority: 30.11.2005 CN 200510125845
(43) Date of publication of application: 13.08.2008
(73) Proprietor: Huawei Technologies Co., Ltd., Longgang District Shenzhen, Guangdong 518129 (CN)
(72) Inventor: HE, Daiyi, Guangdong 5128129 (CN); YANG, Bailiang, Guangdong 5128129 (CN); LI, Yi, Guangdong 5128129 (CN); YANG, Zhentao, Guangdong 5128129 (CN); LI, Shaojun, Guangdong 5128129 (CN); LIU, Yuan, Guangdong 5128129 (CN); FAN, Yunsong, Guangdong 5128129 (CN)
(74) Representative: Kreuz, Georg Maria
(86) International application number: PCT/CN2006/002669
(87) International publication number: WO 2007/062567

(56) References cited:
- WO-A-02/49360
- WO-A1-2004/095839
- CN-A- 1 551 631
- US-A1- 2004 172 654
- DELODDERE D ET AL: "INTERACTIVE VIDEO ON DEMAND" IEEE COMMUNICATIONS MAGAZINE, IEEE SERVICE CENTER, PISCATAWAY, US, vol. 32, no. 5, 1 May 1994 (1994-05-01), pages 82-88, XP000451098 ISSN: 0163-6804
- WANJIUM LIAO ET AL: "The split and merge (SAM) protocol for interactive video-on-demand systems" INFOCOM '97. SIXTEENTH ANNUAL JOINT CONFERENCE OF THE IEEE COMPUTER AN D COMMUNICATIONS SOCIETIES. DRIVING THE INFORMATION REVOLUTION., PROCE EDINGS IEEE KOBE, JAPAN 7-11 APRIL 1997, LOS ALAMITOS, CA, USA,IEEE COMPUT. SOC, US, vol. 3, 7 April 1997 (1997-04-07), pages 1349-1356, XP010251958 ISBN: 978-0-8186-7780-9
- ALMEROTH K C ET AL: "THE ROLE OF MULTICAST COMMUNICATION IN THE PROVISION OF SCALABLE AND INTERACTIVE VIDO-ON-DEMAND SERVICE" PROCEEDINGS OF THE IEEE INTERNATIONAL WORKSHOP ON NETWORK ANDOPERATING SYSTEMS SUPPORT FOR DIGITAL AUDIO AND VIDEO, XX, XX, 1 April 1995 (1995-04-01), pages 267-270, XP001020753
- FEI Z ET AL: "PROVIDING INTERACTIVE FUNCTIONS FOR STAGGERED MULTICAST NEAR VIDEO-ON-DEMAND SYSTEMS" PROCEEDINGS OF THE INTERNATIONAL CONFERENCE ON MULTIMEDIACOMPUTING AND SYSTEMS, LOS ALAMITOS, CA, US, vol. 2, 7 June 1999 (1999-06-07), pages 949-953, XP001023971

## Description

### Field of the Invention

The present invention is related to network multimedia technologies, and more particularly, to a method for implementing a time-shift television (TV) as well as devices and a system thereof.

### Background of the Invention

The live TV, as a main TV technique in the existing broadcast TV system, generally provides unidirectional services for its subscribers. In such a case, the subscribers can do nothing with the schedule of TV programs but watch a fixed TV program at a specified time.

In order to improve service experiences for subscribers when watching TV, a time-shift TV technique emerges as required. A time-shift TV employs the time-shift TV technique to enable playback of live presentations for the subscribers by such time-shift control operations as fast scan reverse, pause, seeking and the like.

At an early stage of network techniques, a time-shift TV generally utilizes memory medium connected to a playing terminal to record and store live data flows to provide a time-shift service. When a playing terminal in a live mode receives a time-shift playing command initiated by a subscriber, it may record and store the live data flows while stop playing the live data flows, and read recorded time-shift data flows stored in the memory medium for playing according to the received time-shift playing command. Similarly, when a playing terminal in a time-shift mode receives a live playing command, it may also continue to record and store the live data flows while stop playing the time-shift version, and to play the received live data flows.

In accordance with the time-shift TV technique above, assume that the speed of playing the live data flows is 1.5Mbps, the live data flows of only one channel recorded for 24 hours will need 16200MB memory spaces, and thus the memory spaces needed for multiple channels are extremely huge. So the cost of storing all the live data flows by the playing terminal itself is very high. Moreover, when watching the time-shift TV programs, the live TV programs need receiving while the playing terminal needs to continuously record the live TV programs; otherwise the continuous time-shift playing could not be supported. In this case, tail-additional-write, head-partial-delete and read operations are made simultaneously to one recorded file, obviously decreasing the response speed of the time-shift operation and disabling better experiences for the subscribers.

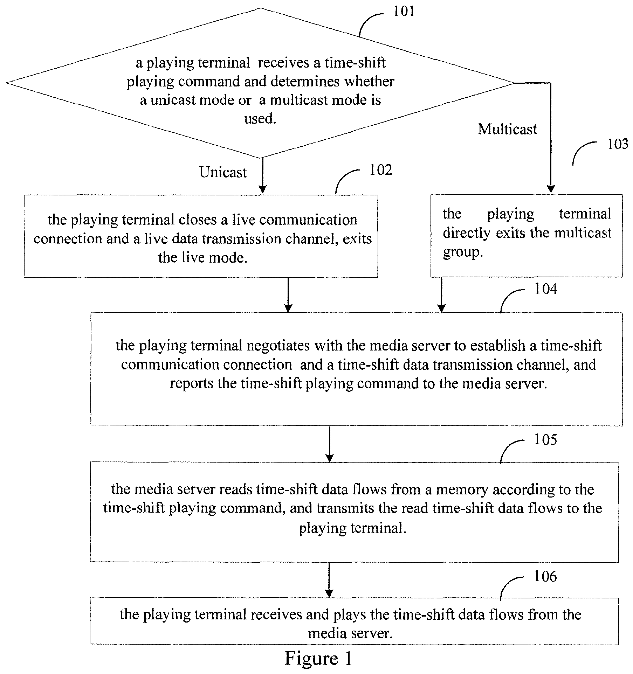

As the development of network techniques, a time-shift TV generally utilizes a media server for recording the live data flows and a playing terminal for controlling the switching between the live data flows and the time-shift data flows to thereby implement time-shift functions. Figure 1 shows a flowchart illustrating a method of switching the live mode to the time-shift mode. The method includes following steps.

Step 101: a playing terminal in a live mode receives a time-shift playing command and determines whether the current live programs are played in a unicast mode or in a multicast mode. If the unicast mode is used, Step 102 is performed; otherwise, Step 103 is performed.

Step 102: the playing terminal releases a live communication connection and a live data transmission channel between the playing terminal and a media server, exits the live mode, and goes to Step 104.

Step 103: the playing terminal directly exits the multicast group.

Step 104: the playing terminal establishes a time-shift communication connection to the media server according to the received time-shift playing command, negotiates with the media server to establish a time-shift data transmission channel with the media server, and reports the time-shift playing command to the media server through the time-shift communication connection.

Step 105: the media server reads time-shift data flows from a memory connected to the media server according to the received time-shift playing command, and transmits the read time-shift data flows to the playing terminal through the established time-shift data transmission channel.

Step 106: the playing terminal receives and plays the time-shift data flows from the media server. So far, switching from the live mode to the time-shift mode is implemented.

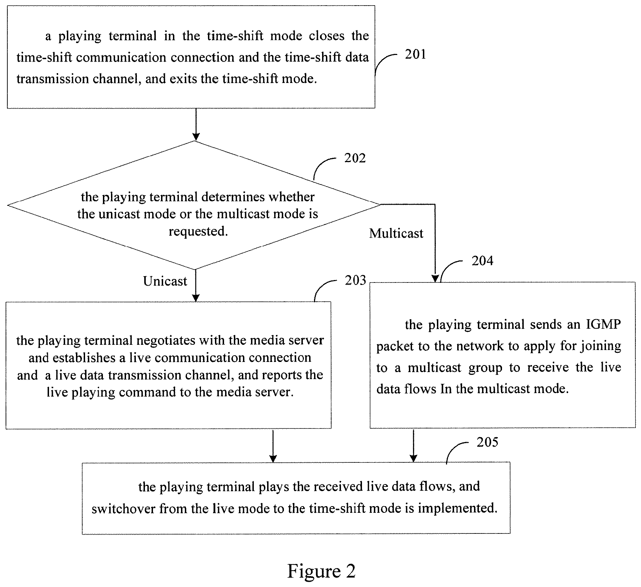

Figure 2 shows a flowchart illustrating the method of switching the time-shift mode to the live mode, which includes the following steps.

Step 201: when receiving a live playing command, a playing terminal in the time-shift mode releases the time-shift communication connection and the time-shift data transmission channel related to the media server, and exits the time-shift mode.

Step 202: the playing terminal determines whether the unicast mode or the multicast mode is requested by the received live playing command. If the unicast mode is requested, Step 203 is performed; otherwise, Step 204 is performed.

Step 203: the playing terminal establishes a live communication connection with the media server, negotiates with the media server and sets up a live data transmission channel with the media server, and reports the live playing command to the media server through the established live communication connection. Upon receiving the live playing command, the media server forwards the data flows received from a video encoder to the playing terminal through the established live data transmission channel, and goes to Step 205.

Step 204: the playing terminal sends an Internet Group Management Protocol (IGMP) packet to the network to apply for joining to a multicast group to receive the live data flows transmitted by the video encoder in the multicast mode.

Step 205: upon receiving the live data flows, the playing terminal plays the received live data flows, and as such, switching from the live mode to the time-shift mode is implemented.

It can be seen from Figures 1 and 2 that, since the time-shift data flows are recorded by the media server and stored in a memory connected to the media server, the requirement of mass storage of the time-shift data flows can be satisfied.

However, in the above solutions, the live and the time-shift functions are implemented by using independent communication connections and data transmission channels. Therefore, when a switching between the live mode and the time-shift mode is needed, the playing terminal needs to release the established communication connection and the data transmission channel before establishing a new communication connection and a new data transmission channel according to the received switching command. As such, repeated operations of closing and establishing the communication connection and the data transmission channel between the playing terminal and the media server may result in low response speed of the time-shift operation.

"Method and system for delivering media selections through a network" (WO 02/49360 A1) provides a media delivery system having a novel architecture aiming at serving multicast-unicast streaming to achieve both scalability and full interactive servers, which cached the multicast media streams generated by the media servers.

"INTERACTIVE VIDEO ON DEMAND" iEEE COMMUNICATIONS MAGAZINE, IEEE SERVICE CENTER, PISCATAWAY, US, vol. 32, no. 5, IMay 1994 (1994-05-01), pages 82-88, XP000451098 ISSN: 0163-6804 (DELODDERE et al) describes two VOD service variants, whereby bandwidth requirements in the network are reduced, while keeping QoS at an equally high level.

"Channel merging method for VOD system" (US 2004/0172654 A1) provides a channel merging method which generates a root channel according to a request from a client that makes the earliest request, generates a sub-channel in response to a request from a client that makes a later request, monitors variation of the number of the clients that are using each of the channels, closing the channel if the number of the clients using the monitored channel becomes zero.

"The split and merge (SAM) protocol for interactive video-on-demand systems" INFOCOM '97. SIXTEENTH ANNUAL JOINT CONFERENCE OF THE IEEE COMPUTER AND COMMUNICATIONS SOCIETIES. DRIVING THE INFORMATION REVOLUTION., PROCEEDINGS IEEE KOBE, JAPAN 7-11 APRIL 1997, LOS ALAMITOS, CA, USA, IEEE COMPUT. SOC, US, vol.3, 7 April 1997 (1997-04-07), pages 1349-1356, XP010251958 ISBN: 978-0-8186-7780-9 (WANJIUM LIAO et al) provides a Split and Merge (SAM) protocol "which offers true VOD services while allowing multiple users to share the same video stream...approach is to split an interactive user from the batch and to serve him with a dedicated video stream".

### Summary of the Invention

The preferred embodiments of the present invention provide a method for implementing time-shift TV programs as well as devices and a system thereof to improve the response speed of time-shift operations.

The method in accordance with an embodiment of the present invention includes: establishing and holding a control channel between a playing terminal and a media server; receiving, by the media server, a time-shift playing command from the playing terminal through the control channel; and stopping, by the media server, forwarding live data flows to the playing terminal, and transmitting time shift data flows to the playing terminal through the control channel in response to the time-shift playing command.

In another embodiment of the present invention, a playing terminal may include a subscriber-side channel holding module, adapted to establish a control channel with a media server and periodically transmitting to the media server a message for holding the control channel; a command module, adapted to transmit a time-shift playing command to the media server through the control channel established by the subscriber-side channel holding module; a data flow receiving module, adapted to receive a time-shift data flow from the media server through the control channel; and a playing module, adapted to play the time-shift data flow received by the data flow receiving module.

In another embodiment of the present invention, a media server may include a network-side channel holding module, adapted to establish a control channel with a playing terminal, receive a message indicating to hold the control channel from the playing terminal, and hold the control channel; a command analyzing module, adapted to receive a time-shift playing command from the playing terminal; a command execution module, adapted to stop forwarding live data flows to the playing terminal in response to the time-shift playing command received by the command analyzing module; and a data flow transmission module, adapted to transmit a live data flow or a time-shift data flow to the playing terminal through the control channel according to an instruction of the command execution module.

In another embodiment of the present invention, a time-shift TV system may include a media server and a playing terminal. The media server and the playing terminal may establish and hold a channel therebetween. The playing terminal may send a time-shift playing command to the media server through the channel; and the media server may transmit a time-shift data flow or a live data flow to the playing terminal through the channel according to the time-shift playing command.

In an embodiment of the present invention, the time-shift playing command is transmitted through a control transmission channel held all the time between the playing terminal and the media server, thus the existing communication connection and data transmission channel between the playing terminal and the media server are needn't removing and a new communication connection and a new data transmission channel are also needn't establishing. In this embodiment, the media server directly switches the live data flows to the time-shift data flows or switches the time-shift data flows to the live data flows through the established and held channel, increasing the speed of switchover between the live-play and the time-shift playing and providing better service experiences to subscribers.

Due to such advantages as quick switchover implementation between the live-play and the time-shift playing, higher switchover speed and better service experiences for subscribers, the present invention is good for spread and appliance of the time-shift TV technique.

The control channel between the playing terminal and the media server is established based on a signalling interaction protocol according to an embodiment of the present invention, where the signalling interaction protocol may be a standard network transmission protocol or a network transmission protocol supported by both the playing terminal and the media server. Thus the solution of the present invention may be different in different scenes and has openness.

In an embodiment of the present invention, the control channel established and held between the playing terminal and the media server may be used to transmit both the switching commands and data flows to implement the interleaving of a signalling interaction channel with a data flow channel, thus the present invention has flexibility in system networking. Furthermore, since the switching command is transmitted through the established control channel both in the unicast application and in the multicast application according to an embodiment of the present invention, the design of the system is greatly simplified.

### Brief Description of the Drawings

Figure 1 is a flowchart illustrating a method of switching the live mode to the time-shift mode according to the prior art;
Figure 2 is a flowchart illustrating a method of switching the time-shift mode to the live mode according to the prior art;
Figure 3 is a flowchart illustrating the technical solution of implementing the time-shift playing in accordance with an embodiment of the present invention;
Figure 4 is a flowchart illustrating the method of switching the live mode to the time-shift mode in accordance with embodiment 1 of the present invention;
Figure 5 is a flowchart illustrating the method of switching the time-shift playing to a new time-shift playing in accordance with embodiment 2 of the present invention;
Figure 6 is a schematic diagram illustrating the system connections in accordance with an embodiment of the present invention;
Figure 7 is a schematic diagram illustrating the playing terminal in accordance with an embodiment of the present invention; and
Figure 8 is a schematic diagram illustrating the structure of the media server in accordance with an embodiment of the present invention.

### Detailed Description of the Invention

The present invention is illustrated by way of examples, and not by way of limitation, in the figures of the accompanying drawings.

An embodiment of the present invention establishes and holds a control channel between the playing terminal and a media server, enabling the media server to receive a time-shift playing command from the playing terminal through the established control channel and to implement the corresponding time-shift operation according to the time-shift playing command.

The time-shift playing commands may include such modes as pause, fast scan reverse, fast scan forward, seeking and shortcut return. Table 1 shows the time-shift playing commands that may be executed by the playing terminal in various modes. The seeking refers to starting playing the time-shift data flows at a specified time. The shortcut return, as a special seeking playing, refers to switching the time-shift mode to the live mode without specifying a time because of the determined live presentation time.

**Table 1**

| mode before an execution of a time-shift playing command | mode after an execution of a time-shift playing command | Switching? | time-shift playing commands that may be executed |
|---|---|---|---|
| Live | Live | No | None |
| Live | Time-shift | Yes | Pause, fast scan reverse and seeking |
| Time-shift | Live | Yes | Fast scan forward, and seeking (shortcut return) |
| Time-shift | Time-shift | No | Pause, fast scan forward, fast scan reverse and seeking |

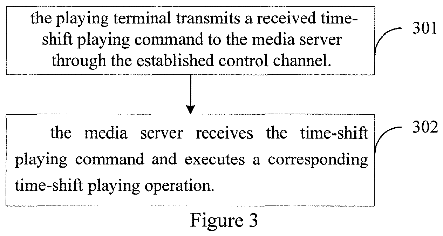

Figure 3 shows a flowchart illustrating a technical solution for implementing the time-shift playing in accordance with an embodiment of the present invention. Before the solution is implemented, a control channel should be established and held between the playing terminal and the media server. The following steps will describe the solution in detail.

Step 301: the playing terminal transmits a received time-shift playing command to the media server through the established control channel. Those skilled in the art should understand that the time-shift playing command is usually initiated by a subscriber, but is not limited thereto.

Step 302: the media server receives the time-shift playing command and executes a corresponding time-shift playing operation.

Note that the control channel between the playing terminal and the media server is established based on a signalling interaction protocol. The signalling interaction protocol may be a standard network transfer protocol such as a Real Time Streaming Protocol (RTSP), or a network transfer protocol supported by both the playing terminal and the media server such as Hypertext Transfer Protocol (HTTP), or the Simple Object Access Protocol (SOAP) and so on. The control channel established and held between the playing terminal and the media server may be used to transmit both the switching commands and data flows, thereby enabling the switching between the data flows and the control streams.

The control channel between the playing terminal and the media server is held by adding a message of holding the control channel to the signalling interaction protocol. When the message of holding the control channel is added to the signalling interaction protocol, the playing terminal reports its state information to the media server periodically, while the media server cooperates with the playing terminal to hold the established control channel according to the state information of the playing terminal. For example, the playing terminal transmits an RTSP-based OPTION message to the media server periodically, and upon receiving the OPTION message, the media server won't release the established control channel if it detects that the playing terminal is still there according to the OPTION message.

If the playing terminal is in the live mode, such time-shift playing commands as pause, fast scan forward or seeking may be executed, and on contrary, if the playing terminal is in the time-shift mode, such time-shift playing commands as pause, fast scan forward, fast scan reverse or seeking may be executed.

The technical solutions for implementing a time-shift TV provided in the present invention will be described with preferred embodiments and drawings.

Embodiment 1 provides implementing process of a time-shift playing when the current mode is the live mode.

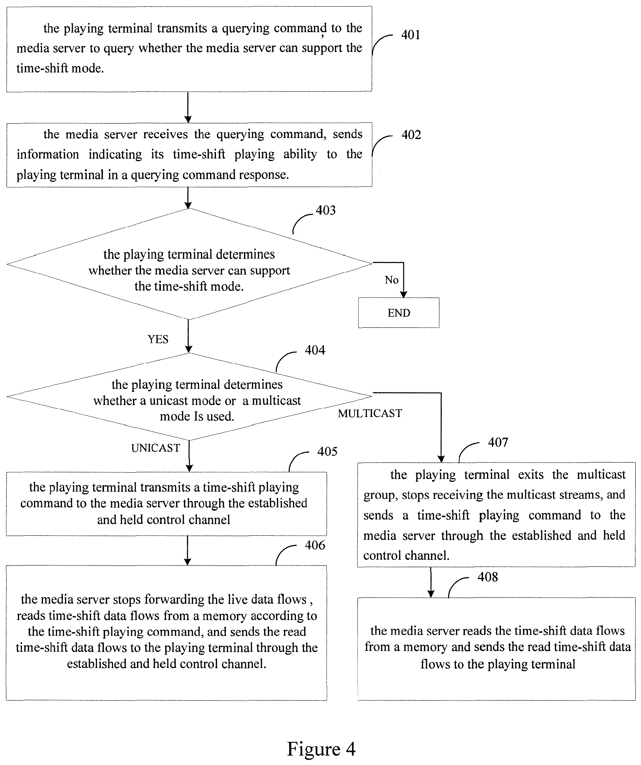

Figure 4 shows a flowchart of switching a live mode to a time-shift mode in accordance with embodiment 1 of the present invention. In this embodiment, a control channel is pre-established and held between the playing terminal and the media server. The playing terminal is in the live mode, and the media server is transmitting live data flows received from a live source to the playing terminal. The live source may be a video encoder.

Step 401: upon receiving a time-shift playing command from a subscriber, the playing terminal transmits a querying command to the media server through the established and held control channel between the playing terminal and the media server to query whether the media server can support the time-shift mode.

Step 402: the media server receives the querying command, sends information indicating its time-shift playing ability to the playing terminal in a querying command response.

Step 403: the playing terminal determines whether the media server can support the time-shift mode according to the received querying command response. If the media server can support the time-shift mode, Step 404 may be performed.

Step 404: the playing terminal determines whether the current live presentations are played in a unicast mode or in a multicast mode. If the unicast mode is used, steps 405-406 are performed; otherwise, steps 407∼408 are performed.

Step 405: the playing terminal transmits a time-shift playing command to the media server through the established and held control channel, where the time-shift playing command may be a pause command, a fast scan reverse command or a seeking command. When the time-shift playing command is the fast scan reverse command, the time-shift playing command may further include a speed of the fast scan reverse. Those skilled in the art should understand that the command may not include the speed of fast scan reverse and the media player may adopt a default speed of fast scan reverse. When the time-shift playing command is seeking, the command may further include a specified time which may be specified in various ways. For example, when the specified time is indicated in a time-difference mode, suppose the current time is 8 a.m. and the determined time difference is "-15 minutes", the specified time is 7:45 a.m. When the specified time is indicated with absolute time, the specified time may be directly indicated by 7:45 a.m. Note that the specified time can be a certain time before the current time rather than a time after the current time.

Step 406: upon receiving the time-shift playing command, the media server stops forwarding the live data flows received from the video encoder to the playing terminal, reads time-shift data flows from a memory connected to the media server according to the time-shift playing command, and sends the read time-shift data flows to the playing terminal through the established and held control channel. As such, the live mode is switched to the time-shift mode.

When the time-shift playing command received by the media server is pause, step 406 may be specially described as follows.

Upon receiving the pause command, the media server stops forwarding the live data flows from the video encoder to the playing terminal and records the current time. The playing terminal stops decoding the live data flows and freezes the image at the current moment. The playing terminal does not play the data flows any more after pausing, thus what the media player should do is stopping transmitting the live data flows to the playing terminal.

When the time-shift playing command received by the media server is fast scan reverse, step 406 may be specially described as follows.

Upon receiving the fast scan reverse command, the media server stops forwarding the live data flows from the video encoder to the playing terminal, reads time-shift data flows from the memory connected to the media server according to a default speed of fast scan reverse or a speed specified in the fast scan reverse command, and sends the read time-shift data flows to the playing terminal through the established and held control channel according to the default speed or the speed of fast scan reverse. As such, the live mode is switched to the time-shift mode.

When the time-shift playing command received by the media server is a seeking command, step 406 may be specially described as follows.

Upon receiving the seeking command, the media server stops forwarding the live data flows from the video encoder to the playing terminal, reads the time-shift data flows from the memory connected to the media server according to the specified time in the seeking command, positions the start time of playing the time-shift data flows at the specified time, and sends the read time-shift data flows to the playing terminal through the established and held control channel. As such, the live mode is switched to the time-shift mode.

Step 407: the playing terminal exits the multicast group, stops receiving the multicast streams, and sends a time-shift playing command to the media server through the established and held control channel.

Step 408: upon receiving the time-shift playing command, the media server reads the time-shift data flows from a memory connected with the media server according to the time-shift playing command, and sends the read time-shift data flows to the playing terminal through the established and held control channel. As such, the live mode is switched to the time-shift mode. When the time-shift playing command is the pause command, the fast scan reverse command, or the seeking command, the special processes are identical to those of step 406, thus no more descriptions will be given here.

Embodiment 2 provides implementation of a new time-shift playing when the current mode is the time-shift mode. In the time-shift mode, such time-shift playing commands as pause, fast scan reverse, fast scan forward and seeking may be executed. The fast scan forward and seeking commands can switch the time-shift mode to the live mode in certain conditions. Additionally, for the sake of subscriber's convenience, a shortcut return command may be defined. The shortcut return command is a special seeking command where the specified time may be the current time, i.e. the play time of the live data flows.

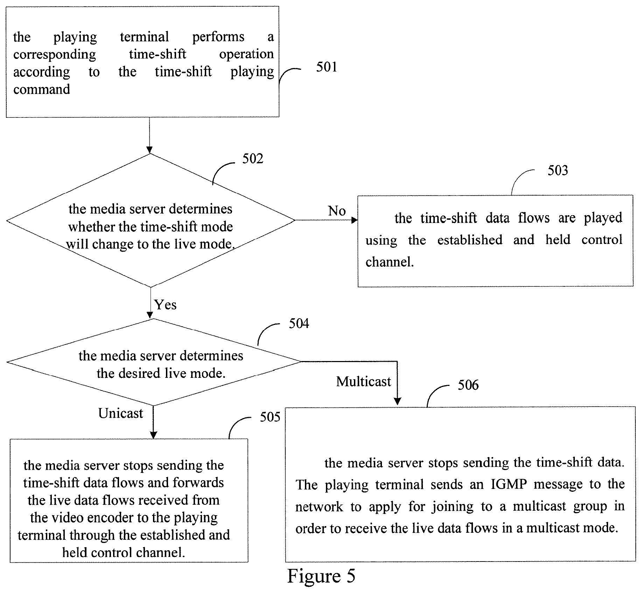

Figure 5 shows a flowchart illustrating the implementation of the time-shift playing when the current mode is the time-shift mode in accordance with embodiment 2 of the present invention. In this embodiment, a control channel is pre-established and held between the playing terminal and the media server. The playing terminal is in the time-shift mode at the moment. The method may include these steps:
Step 501: upon receiving a time-shift playing command sent from a subscriber, the playing terminal performs a corresponding time-shift operation according to the time-shift playing command, that is, the playing terminal plays the corresponding time-shift data flows.

When the time-shift playing command is the pause command, the media server may stop transmitting the time-shift data flows to the playing terminal and may record the current time. The image on the playing terminal is frozen at the current playing time.

When the time-shift playing command is the fast scan reverse command, the media server starts transmitting the time-shift data flows recorded before the current played time-shift data flows to the playing terminal through the established and held control channel according to a default speed of fast scan reverse or a speed given by the fast scan reverse command.

When the time-shift playing command is the fast scan forward command, the media server starts transmitting the time-shift data flows recorded after the current played time-shift data flows, to the playing terminal through the established and held control channel according to a default speed of fast scan forward or a speed given by the fast scan forward command.

When the time-shift playing command is the seeking (shortcut return) command, the media server stops playing the time-shift data flows and positions the start time of playing the time-shift data flows at the time specified by the seeking command.

Step 502: the media server determines whether the time-shift mode will change to the live mode. If the time-shift mode will change to the live mode, perform Step 504; otherwise, perform Step 503. If the fast scan forward command is carried out currently, when the recorded time of the time-shift data flows played currently is the current time, the time-shift mode should be switched to the live mode. If the seeking command is carried out currently, when the specified time in the seeking command is the current time, the time-shift mode should be switched to the live mode.

Step 503: the time-shift data flows are played using the established and held control channel according to the time-shift playing command in Step 501.

In the case that the time-shift playing command is a seeking command, whether the time-shift mode will change to the live mode may be determined first. If the time-shift mode will not change to the live mode, the media server stops playing the time-shift flows, positions the start time of playing the new time-shift data flows at the specified time according to the time specified by the seeking command and plays the time-shift data flows. If the time-shift mode will change to the live mode, perform Step 504 directly.

Step 504: the media server determines the desired live mode. If a unicast mode is required, perform Step 505. If a multicast mode is required, perform Step 506.

If the time-shift playing command is the shortcut return command, Step 504 may be performed directly without performing Steps 501∼503.

Step 505: the media server stops sending the time-shift data flows to the playing terminal and forwards the live data flows received from the video encoder to the playing terminal through the established and held control channel. As a result, the switching from the time-shift mode to the live mode is implemented.

Step 506: the media server stops sending the time-shift data flows to the playing terminal. The playing terminal sends an IGMP message to the network to apply for joining to a multicast group in order to receive the live data flows transmitted by the video encoder in a multicast mode. As such, the time-shift mode is switched to the live mode.

In Steps 406 and 408 of embodiment 1 of the present invention, the media server sends the read time-shift data flows to the playing terminal through the established and held control channel, implementing the time-shift playing. In embodiment 2 of the present invention, no matter whether the time-shift mode is switched to the live mode, the time-shift data flows are sent to the playing terminal through the established and held control channel. Moreover, when the time-shift mode is switched to the live mode, the live data flows are sent to the playing terminal through the control channel as well.

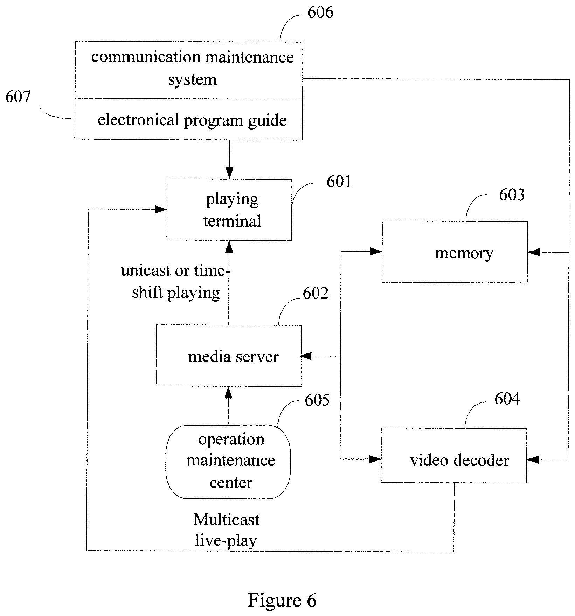

A time-shift system for implementing time-shift solution of the present invention is shown in Figure 6, and includes a playing terminal 601, a media server 602, a memory 603 and a video decoder 604.

The playing terminal 601 is used for establishing and holding a control channel with the media server 602, sending a time-shift playing command to the media server 602 through the control channel, and receiving and playing time-shift data flows from the media server 602.

The media server 602 is used for establishing and holding the control channel with the playing terminal 601, receiving the time-shift playing command from the playing terminal 601 through the control channel, analyzing the time-shift playing command, reading the corresponding time-shift data flows and sending such time-shift data flows to the playing terminal 601. Moreover, the media server 602 is further used for sending the live data flows to the playing terminal 601 through the control channel and performing a switching between the live mode and the time-shift mode.

The memory 603 is utilized to record the live data flows to form a media file which is provided to the media server 602 to generate time-shift data flows. There may be multiple memories 603 in distributed design to record multiple channels simultaneously to satisfy the demand of mass storage.

The video decoder 604 is used for decoding the live data flows, transmitting the live data flows to the media server 602 and the memory 603, and also functions as a source of multicast programs.

The memory 603 and the video decoder 604 may be individually constructed or be integrated in the media server 602.

The system for implementing time-shift solution of the present invention may further include an operation maintenance center 605 maintaining the media server 602, a communication maintenance system 606 for maintaining the communication connections between each part of the whole time-shift system, and an electronic program guide 607 for notifying the playing terminal 601 of the contents of the live programs and facilitating to receive the live programs.

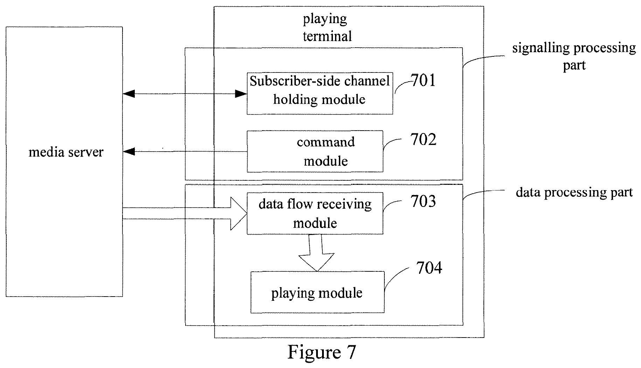

The playing terminal of the time-shift system of figure 6 is shown in figure 7, where the thick arrowhead denotes a data flow direction and the thin arrowhead denotes a signalling flow direction. The playing terminal may include a subscriber-side channel holding module 701, a command module 702, a data flow receiving module 703, and a playing module 704.

The subscriber-side channel holding module 701 is used to establish a control channel with the media server and periodically transmit a message to the media server to hold the control channel.

The command module 702 is used for transmitting a time-shift playing command to the media server through the control channel established by the subscriber-side channel holding module 701.

The data flow receiving module 703 is utilized to receive the time-shift data flows or the unicast data flows from the media server and receive the multicast data flows from the multicast source. The multicast source may be a media server or a video decoder.

The playing module 704 is utilized to play the received time-shift data flows, where the playing operations may include normal play, fast scan reverse, fast scan forward and pause. The playing module 704 is also used to play the received live data flows.

The subscriber-side channel holding module 701 and the command module 702 constitute a signalling processing part of the playing terminal, and the data flow receiving module 703 and the playing module 704 constitute a data processing part of the playing terminal.

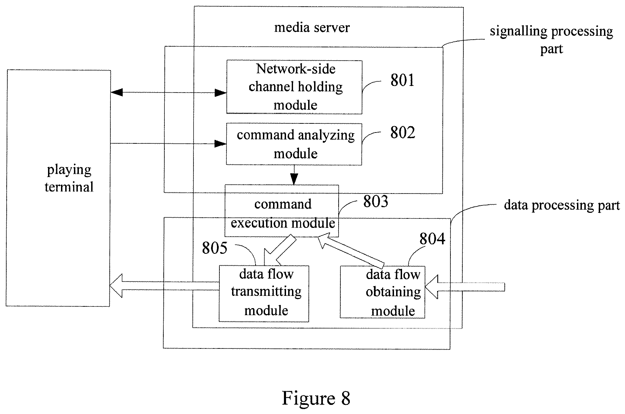

The media server of the time-shift system of figure 6 is shown in figure 8 where the thick arrowhead denotes a data flow direction and the thin arrowhead denotes a signalling flow direction. The media server may include a network-side channel holding module 801, a command analyzing module 802, a command execution module 803, a data flow obtaining module 804 and a data flow transmitting module 805.

The network-side channel holding module 801 is used for establishing a control channel with the playing terminal, receiving a message indicating to hold the control channel from the playing terminal, and holding the control channel.

The command analyzing module 802 is for use in receiving a time-shift playing command from the playing terminal, analyzing the contents of the time-shift playing command to determine the corresponding time-shift operation, and controlling the command execution module 803 to execute the time-shift operation.

The command execution module 803 is used for performing the time-shift operation. The time-shift operation may include at least one of recording the current time, i.e. the current time of playing the current live data flows, setting the time of playing the time-shift data flow, adjusting the speed of the time-shift data flows when the fast scan forward or fast scan reverse operation is executed, stopping or starting transmitting the time-shift data flows or the live data flows, and performing the interleaving of the time-shift data flows with the live data flows.

The data flow obtaining module 804 is used to receive the time-shift data flows from a memory or to receive the live data flows from a live program source. The live program source may be a video decoder.

The data flow transmitting module 805 is used to transmit the live data flows or the time-shift data flows through the control channel held between the media server and the playing terminal according to the command of the command execution module 803.

The network-side channel holding module 801 and the command analysis module 802 constitute a signalling processing part, while the data flow obtaining module 804 and the data flow transmitting module 805 constitute a data processing part. The command execution module 803 may be used both in executing signalling processing commands and in executing data processing commands.

In actual applications, the media server may also transmit the time-shift data flows to the playing terminal through the existing data transmission channel between the playing terminal and the playing terminal or through a newly-established data transmission channel to implement various time-shift operations such as a live-to-time-shift operation or a time-shift-to-live operation.

Though the present invention has been illustrated and described by some preferred embodiments, those skilled in the art should understand that various changes may be made in form and detail without departing from the scope of the present invention and therefore should be covered in the protection scope of the present invention defined by the appended claims and its equivalents.

## Claims

1. A method for implementing a time-shift television TV, comprising:
establishing and holding a control channel between a playing terminal and a media server for transmitting time-shift playing commands; and
receiving, by the media server, a time-shift playing command from the playing terminal through the control channel; and
stopping, by the media server, forwarding live data flows to the playing terminal, and transmitting time shift data flows to the playing terminal through the control channel in response to the time-shift playing command.

2. A method according to Claim 1, wherein the control channel between the playing terminal and the media server is established according to any one of the Real Time Streaming Protocol RTSP, the Hypertext Transfer Protocol HTTP, and the Simple Object Access Protocol SOAP.

3. A method according to Claim 1, wherein before the receiving a time-shift playing command from the playing terminal through the control channel, the method further comprises:
receiving, by the media server, a querying command from the playing terminal in a live mode through the control channel;
sending, by the media server, information indicating whether the media server supports a time-shift mode according to the querying command;
wherein, the playing terminal is configured to exit the live mode and send the time-shift playing command to the media server in response to receiving the information indicating the media server supports the time-shift mode.

4. A method according to Claim 3, wherein
if the time-shift playing command is a pausing command, and the method further comprises: recording, by the media server, a current time in response to receiving the pausing command.

5. A method according to Claim 3, wherein
if the time-shift playing command is a fast scan reverse command, the method further comprising: reading, by the media server, a time-shift data flow from a memory connected to the media server according to a default speed of the fast scan reverse or a speed specified in the fast scan reverse command, and
wherein transmitting time shift data flows to the playing terminal through the control channel comprises: sending the read time-shift data flow to the playing terminal through the control channel according to the default speed of the fast scan reverse or the speed specified in the fast scan reverse command.

6. A method according to Claim 3, wherein
if the time-shift playing command is a seeking command, the method further comprising: reading, by the media server, a time-shift data flow from the memory connected to the media server according to a specified time in the seeking command, positioning a start time of playing the read time-shift data flow at the specified time, and
wherein transmitting time shift data flows to the playing terminal through the control channel comprises: sending the read time-shift data flow to the playing terminal through the control channel.

7. A method according to Claim 1, wherein the playing terminal is in a time-shift mode and the stopping by the media server forwarding live data flows to the playing terminal and transmitting time shift data flows to the playing terminal through the control channel comprise at least one of:
the media server stopping transmitting a time-shift data flow to the playing terminal and recording a time of the current played time-shift data flow, when the time-shift playing command is a pause command;
the media server starting at a recorded time of the currently played time-shift data flow to transmit a time-shift data flow to the playing terminal through the control channel according to a default speed of the fast scan reverse/fast scan forward command or a speed specified in the fast scan reverse/fast scan forward command, when the time-shift playing command is a fast scan reverse/ fast scan forward command; and
the media server stopping playing the time-shift data flow, positioning a start time of playing the time-shift data flow at a specified time which is specified in the seeking command, when the time-shift playing command is a seeking command.

8. A method according to claim 7, further comprising:
the media server determining whether a time-shift mode is to change to a live mode; if the time-shift mode is to change to the live mode, the media server switching the time-shift playing to the live-play; otherwise, performing a time-shift playing operation corresponding to the time-shift playing command.

9. A method according to Claim 8, wherein the media server switching the time-shift playing to the live-play comprises:
the media server determining whether a unicast mode or a multicast mode is to be used; and if a unicast mode is to be used, the media server stopping sending the time-shift data flow to the playing terminal and forwarding the live data flow to the playing terminal through the control channel; if a multicast mode is to be used, the media server stopping sending the time-shift data flow to the playing terminal, and the playing terminal transmitting an Internet Group Message Protocol IGMP message to apply for joining to a multicast group to receive the live data flow transmitted in the multicast mode.

10. A playing terminal, comprising:
a subscriber-side channel holding module, adapted to establish a control channel with a media server and periodically transmitting to the media server a message for holding the control channel; and
a command module, adapted to transmit a time-shift playing command to the media server through the control channel established by the subscriber-side channel holding module;
a data flow receiving module, adapted to receive a time-shift data flow from the media server through the control channel; and
a playing module, adapted to play the time-shift data flow received by the data flow receiving module.

11. A playing terminal according to Claim 10, wherein the playing module playing the time-shift data flow comprises one of:
playing the time-shift data flow in a normal play mode,
playing the time-shift data flow in a fast scan reverse mode,
playing the time-shift data flow in a fast scan forward mode,
playing the time-shift data flow in a pausing mode, and
playing the time-shift data flow in a seeking mode.

12. A playing terminal according to claim 10 or 11, wherein the data flow receiving module is further adapted to receive the live data flow from a live program source; and the playing module is further adapted to play the live data flow received by the data flow receiving module in a normal play mode.

13. A media server, comprising:
a network-side channel holding module, adapted to establish a control channel with a playing terminal, receive a message indicating to hold the control channel from the playing terminal, and hold the control channel; and
a command analyzing module, adapted to receive a time-shift playing command from the playing terminal;
a command execution module, adapted to stop forwarding live data flows to the playing terminal in response to the time-shift playing command received by the command analyzing module; and
a data flow transmission module, adapted to transmit a live data flow or a time-shift data flow to the playing terminal through the control channel according to an instruction of the command execution module.

14. A media server according to Claim 13, wherein
the command analyzing module is further adapted to analyze the time-shift playing command to determine a time-shift playing operation corresponding to the time-shift playing command;
the command execution module is further adapted to execute the time-shift playing operation determined by the command analyzing module.

15. A media server according to Claim 14, wherein the time-shift playing operation comprises at least one of:
an operation of recording the time of the current live data flow,
an operation of adjusting a time of playing the time-shift data flow,
an operation of adjusting a speed of fast scan forward or a speed of fast scan reverse the time-shift data flow,
an operation of stopping or starting transmitting the time-shift data flow or the live data flow, or
an operation of switching the time-shift data flow to the live data flow or the reverse.

16. A media server according to claim 13 or 14, further comprising one of:
a data flow obtaining module, adapted to perform one of receiving the time-shift data flow from a memory and receiving the live data flow from the a program source;
a video decoder, adapted to be a live-play program source; and
a memory , adapted to store the live data flow as a media file.

17. A time-shift TV system, comprising:
a playing terminal according to any of Claims 10-12;
a media server according to any of Claims 13-16.

18. A time-shift TV system according to Claim 17, further comprising:
a video decoder, adapted to be a live-play program source;
wherein the media server is further adapted to receive the live data flow from the video decoder and forward the received live data flow to the playing terminal.

19. A time-shift TV system according to Claim 18, further comprising:
a memory for storing the live data flow as a media file;
wherein the media server is further adapted to read the media file in the memory to form a time-shift data flow and transmit the time-shift data flow to the playing terminal.

20. A time-shift playing system according to claim 18 or 19, wherein the video decoder or the memory is integrated in the media server.

## Patentansprüche

1. Verfahren zum Implementieren eines zeitversetzten Fernsehens, TV, umfassend:
Einrichten und Halten eines Steuerkanals zwischen einem Abspielendgerät und einem Medienserver zum Übertragen von Befehlen zum zeitversetzten Abspielen und Empfangen eines Befehls zum zeitversetzten Abspielen von dem Abspielendgerät durch den Medienserver über den Steuerkanal und
Stoppen des Weiterleitens von Live-Datenströmen an das Abspielendgerät durch den Medienserver und Übertragen zeitversetzter Datenströme an das Abspielendgerät über den Steuerkanal in Reaktion auf den Befehl zum zeitversetzten Abspielen.

2. Verfahren nach Anspruch 1, wobei der Steuerkanal zwischen dem Abspielendgerät und dem Medienserver gemäß einem beliebigen von dem "Real-Time Streaming Protocol" RTSP, dem "Hypertext Transfer Protocol" HTTP und dem "Simple Object Access Protocol" SOAP eingerichtet wird.

3. Verfahren nach Anspruch 1, wobei vor dem Empfangen eines Befehls zum zeitversetzten Abspielen von dem Abspielendgerät über den Steuerkanal das Verfahren ferner Folgendes umfasst:
Empfangen eines Abfragebefehls von dem Abspielendgerät in einem Live-Modus über den Steuerkanal durch den Medienserver;
Senden von Informationen durch den Medienserver, die angeben, ob der Medienserver einen zeitversetzten Modus unterstützt, gemäß dem Abfragebefehl;
wobei das Abspielendgerät dafür konfiguriert ist, den Live-Modus zu beenden und den Befehl zum zeitversetzten Abspielen in Reaktion auf das Empfangen der Informationen, die angeben, dass der Medienserver einen zeitversetzten Modus unterstützt, an den Medienserver zu senden.

4. Verfahren nach Anspruch 3, wobei,
wenn der Befehl zum zeitversetzten Abspielen ein Pausebefehl ist, und das Verfahren ferner Folgendes umfasst: Aufzeichnen einer aktuellen Zeit in Reaktion auf das Empfangen des Pausebefehls durch den Medienserver.

5. Verfahren nach Anspruch 3, wobei,
wenn der Befehl zum zeitversetzten Abspielen ein Schnellscan-Rückwärts-Befehl ist, das Verfahren ferner Folgendes umfasst: Lesen eines zeitversetzten Datenstroms von einem Speicher, der mit dem Medienserver verbunden ist, durch den Medienserver gemäß einer Standardgeschwindigkeit des Schnellscan rückwärts oder einer Geschwindigkeit, die in dem Schnellscan-Rückwärts-Befehl festgelegt ist, und
wobei das Übertragen zeitversetzter Datenströme an das Abspielendgerät über den Steuerkanal Folgendes umfasst: Senden des gelesenen zeitversetzten Datenstroms an das Abspielendgerät über den Steuerkanal gemäß der Standardgeschwindigkeit des Schnellscan rückwärts oder der Geschwindigkeit, die in dem Schnellscan-Rückwärts-Befehl festgelegt ist.

6. Verfahren nach Anspruch 3, wobei
wenn der Befehl zum zeitversetzten Abspielen ein Suchbefehl ist, das Verfahren ferner Folgendes umfasst: Lesen eines zeitversetzten Datenstroms von dem Speicher, der mit dem Medienserver verbunden ist, durch den Medienserver gemäß einer festgelegten Zeit in dem Suchbefehl, Positionieren einer Startzeit des Abspielens des gelesenen zeitversetzten Datenstroms zu der festgelegten Zeit, und
wobei das Übertragen zeitversetzter Datenströme an das Abspielendgerät über den Steuerkanal Folgendes umfasst: Senden des gelesenen zeitversetzten Datenstroms an das Abspielendgerät über den Steuerkanal.

7. Verfahren nach Anspruch 1, wobei das Abspielendgerät in einem zeitversetzten Modus ist und das Stoppen des Weiterleitens von Live-Datenströmen an das Abspielendgerät durch den Medienserver und das Übertragen zeitversetzter Datenströme an das Abspielendgerät über den Steuerkanal mindestens eines des Folgenden umfasst:
dass der Medienserver das Übertragen eines zeitversetzten Datenstroms an das Abspielendgerät stoppt und eine Zeit des aktuell abgespielten zeitversetzten Datenstroms aufzeichnet, wenn der Befehl zum zeitversetzten Abspielen ein Pausebefehl ist;
dass der Medienserver zu einer aufgezeichneten Zeit des aktuell abgespielten zeitversetzten Datenstroms beginnt, einen zeitversetzten Datenstrom über den Steuerkanal gemäß einer Standardgeschwindigkeit des Schnellscan rückwärts / Schnellscan vorwärts oder einer Geschwindigkeit, die in dem Schnellscan-Rückwärts- /Schnellscan-Vorwärts-Befehl festgelegt ist, an das Abspielendgerät zu übertragen, wenn der Befehl zum zeitversetzten Abspielen ein Schnellscan-Rückwärts- /Schnellscan-Vorwärts-Befehl ist; und
dass der Medienserver das Abspielen des zeitversetzten Datenstroms stoppt, eine Startzeit des Abspielens des zeitversetzten Datenstroms zu einer festgelegten Zeit positioniert, die in dem Suchbefehl festgelegt ist, wenn der Befehl zum zeitversetzten Abspielen ein Suchbefehl ist.

8. Verfahren nach Anspruch 7, ferner Folgendes umfassend:
dass der Medienserver bestimmt, ob ein zeitversetzter Modus zu einem Live-Modus wechseln soll; dass der Medienserver, wenn der zeitversetzte Modus zu dem Live-Modus wechseln soll, das zeitversetzte Abspielen zum Live-Abspielen wechselt; anderenfalls Durchführen eines Vorgangs des zeitversetzten Abspielens entsprechend dem Befehl zum zeitversetzten Abspielen.

9. Verfahren nach Anspruch 8, wobei das Umschalten des zeitversetzten Abspielens zum Live-Abspielen durch den Medienserver Folgendes umfasst:
dass der Medienserver bestimmt, ob ein Unicast-Modus oder ein Multicast-Modus verwendet werden soll; und dass der Medienserver, wenn ein Unicast-Modus verwendet werden soll, das Senden des zeitversetzten Datenstroms an das Abspielendgerät stoppt und den Live-Datenstrom über den Steuerkanal an das Abspielendgerät weiterleitet; dass der Medienserver, wenn ein Multicast-Modus verwendet werden soll, das Senden des zeitversetzten Datenstroms an das Abspielendgerät stoppt und das Abspielendgerät eine Nachricht nach dem "Internet Group Message Protocol" IGMP überträgt, um sich für den Anschluss an eine Multicast-Gruppe anzumelden, um den Live-Datenstrom zu empfangen, der im Multicast-Modus übertragen wird.

10. Abspielendgerät, Folgendes umfassend:
ein abonnentenseitiges Kanalhaltemodul, das dafür eingerichtet ist, einen Steuerkanal mit einem Medienserver einzurichten und periodisch eine Nachricht zum Halten des Steuerkanals an den Medienserver zu übertragen; und
ein Befehlsmodul, das dafür eingerichtet ist, einen Befehl zum zeitversetzten Abspielen über den Steuerkanal, der von dem abonnentenseitigen Kanalhaltemodul eingerichtet wurde, an den Medienserver zu übertragen;
ein Datenstrom-Empfangsmodul, das dafür eingerichtet ist, einen zeitversetzten Datenstrom von dem Medienserver über den Steuerkanal zu empfangen; und
ein Abspielmodul, das dafür eingerichtet ist, den zeitversetzten Datenstrom, der von dem Datenstrom-Empfangsmodul empfangen wurde, abzuspielen.

11. Abspielendgerät nach Anspruch 10, wobei das Abspielen des zeitversetzten Datenstroms durch das Abspielmodul eines der Folgenden umfasst:
Abspielen des zeitversetzten Datenstroms in einem normalen Abspielmodus,
Abspielen des zeitversetzten Datenstroms in einem Schnellscan-Rückwärts-Modus,
Abspielen des zeitversetzten Datenstroms in einem Schnellscan-Vorwärts-Modus,
Abspielen des zeitversetzten Datenstroms in einem Pausemodus und
Abspielen des zeitversetzten Datenstroms in einem Suchmodus.

12. Abspielendgerät nach Anspruch 10 oder 11, wobei das Datenstrom-Empfangsmodul ferner dafür eingerichtet ist, den Live-Datenstrom von einer Live-Programmquelle zu empfangen; und das Abspielmodul ferner dafür eingerichtet ist, den Live-Datenstrom, der von dem Datenstrom-Empfangsmodul empfangen wurde, in einem normalen Abspielmodus abzuspielen.

13. Medienserver, Folgendes umfassend:
ein netzwerkseitiges Kanalhaltemodul, das dafür eingerichtet ist, einen Steuerkanal mit einem Abspielendgerät einzurichten, eine Nachricht von dem Abspielendgerät zu empfangen, die angibt, den Steuerkanal zu halten, und den Steuerkanal zu halten; und ein Befehlsanalysemodul, das dafür eingerichtet ist, einen Befehl zum zeitversetzten Abspielen von dem Abspielendgerät zu empfangen;
ein Befehlsausführungsmodul, das dafür eingerichtet ist, das Weiterleiten von Live-Datenströmen an das Abspielendgerät in Reaktion auf den Befehl zum zeitversetzten Abspielen, der von dem Befehlsanalysemodul empfangen wurde, zu stoppen; und
ein Datenstrom-Übertragungsmodul, das dafür eingerichtet ist, einen Live-Datenstrom oder einen zeitversetzten Datenstrom gemäß einer Anweisung des Befehlsausführungsmoduls über den Steuerkanal an das Abspielendgerät zu übertragen.

14. Medienserver nach Anspruch 13, wobei
das Befehlsanalysemodul ferner dafür eingerichtet ist, den Befehl zum zeitversetzten Abspielen zu analysieren, um einen Vorgang des zeitversetzten Abspielens entsprechend dem Befehl zum zeitversetzten Abspielen zu bestimmen;
das Befehlsausführungsmodul ferner dafür eingerichtet ist, den Vorgang des zeitversetzten Abspielens, der von dem Befehlsanalysemodul bestimmt wurde, auszuführen.

15. Medienserver nach Anspruch 14, wobei der Vorgang des zeitversetzten Abspielens mindestens eines der Folgenden umfasst:
einen Vorgang des Aufzeichnens der Zeit des aktuellen Live-Datenstroms,
einen Vorgang des Einstellens einer Zeit des Abspielens des zeitversetzten Datenstroms,
einen Vorgang des Einstellens einer Geschwindigkeit des Schnellscan vorwärts oder des Schnellscan rückwärts des zeitversetzten Datenstroms,
einen Vorgang des Stoppens oder Beginnens des Übertragens des zeitversetzten Datenstroms oder des Live-Datenstroms oder
einen Vorgang des Umschaltens des zeitversetzten Datenstroms auf den Live-Datenstrom oder umgekehrt.

16. Medienserver nach Anspruch 13 oder 14, ferner eines der Folgenden umfassend:
ein Datenstrom-Einholungsmodul, das dafür eingerichtet ist, eines von Empfangen des zeitversetzten Datenstroms von einem Speicher und Empfangen des Live-Datenstroms von einer Programmquelle auszuführen;
einen Videodecoder, der dafür eingerichtet ist, eine Live-Abspielprogrammquelle zu sein; und
einen Speicher, der dafür eingerichtet ist, den Live-Datenstrom als eine Mediendatei zu speichern.

17. System für zeitversetztes TV, umfassend:
ein Abspielendgerät nach einem der Ansprüche 10 bis 12;
einen Medienserver nach einem der Ansprüche 13 bis 16.

18. System für zeitversetztes TV nach Anspruch 17, ferner Folgendes umfassend:
einen Videodecoder, der dafür eingerichtet ist, eine Live-Abspielprogrammquelle zu sein;
wobei der Medienserver ferner dafür eingerichtet ist, den Live-Datenstrom von dem Videodecoder zu empfangen und den empfangenen Live-Datenstrom zu dem Abspielendgerät weiterzuleiten.

19. System für zeitversetztes TV nach Anspruch 18, ferner Folgendes umfassend:
einen Speicher zum Speichern des Live-Datenstroms als eine Mediendatei;
wobei der Medienserver ferner dafür eingerichtet ist, die Mediendatei in dem Speicher zu lesen, um einen zeitversetzten Datenstrom zu bilden, und den zeitversetzten Datenstrom an das Abspielendgerät zu übertragen.

20. System für zeitversetztes Abspielen nach Anspruch 18 oder 19, wobei der Videodecoder oder der Speicher in den Medienserver integriert ist.

## Revendications

1. Procédé de mise en oeuvre d'une télévision, TV, différée, comprenant :
établissement et maintien d'un canal de commande entre un terminal de lecture et un serveur multimédia pour la transmission d'instructions de lecture différée ; et
réception, par le serveur multimédia, d'une instruction de lecture différée de la part du terminal de lecture par le biais du canal de commande ; et
arrêt, par le serveur multimédia, du transfert de flux de données en direct vers le terminal de lecture et transmission de flux de données différés au terminal de lecture par le biais du canal de commande en réponse à l'instruction de lecture différée.

2. Procédé selon la revendication 1, le canal de commande entre le terminal de lecture et le serveur multimédia étant établi selon l'un quelconque des protocoles RTSP (protocole de diffusion continue en temps réel), HTTP (protocole de transfert hypertexte) et SOAP (protocole d'accès d'objet simple).

3. Procédé selon la revendication 1, avant la réception d'une instruction de lecture différée de la part du terminal de lecture par le biais du canal de commande, le procédé comprenant en outre :
réception, par le serveur multimédia, d'une instruction d'interrogation de la part du terminal de lecture dans un mode en direct par le biais du canal de commande ;
envoi, par le serveur multimédia, d'informations indiquant si le serveur multimédia prend en charge un mode différé conformément à l'instruction d'interrogation ou non ;
le terminal de lecture étant configuré pour quitter le mode en direct et envoyer l'instruction de lecture différée au serveur multimédia en réponse à la réception des informations indiquant que le serveur multimédia prend en charge le mode différé.

4. Procédé selon la revendication 3,
si l'instruction de lecture différée est une instruction de mise en pause, et le procédé comprenant en outre : enregistrement, par le serveur multimédia, d'une heure actuelle en réponse à la réception de l'instruction de mise en pause.

5. Procédé selon la revendication 3,
si l'instruction de lecture différée est une instruction de retour à balayage rapide, le procédé comprenant en outre : lecture, par le serveur multimédia, d'un flux de données différé depuis une mémoire connectée au serveur multimédia conformément à une vitesse par défaut du retour à balayage rapide ou à une vitesse spécifiée dans l'instruction de retour à balayage rapide, et
la transmission de flux de données différés au terminal de lecture par le biais du canal de commande comprenant : envoi du flux de données différé lu au terminal de lecture par le biais du canal de commande conformément à la vitesse par défaut du retour à balayage rapide ou à la vitesse spécifiée dans l'instruction de retour à balayage rapide.

6. Procédé selon la revendication 3,
si l'instruction de lecture différée est une instruction de recherche, le procédé comprenant en outre : lecture, par le serveur multimédia, d'un flux de données différé depuis une mémoire connectée au serveur multimédia conformément à une heure spécifiée dans l'instruction de recherche, positionnement d'une heure de début de lecture du flux de données différé à l'heure spécifiée, et
la transmission de flux de données différés au terminal de lecture par le biais du canal de commande comprenant : envoi du flux de données différé lu au terminal de lecture par le biais du canal de commande.

7. Procédé selon la revendication 1, le terminal de lecture se trouvant dans un mode différé et l'arrêt par le serveur multimédia du transfert de flux de données en direct vers le terminal de lecture et la transmission de flux de données différés au terminal de lecture par le biais du canal de commande comprenant au moins l'une des opérations suivantes :
le serveur multimédia arrête la transmission d'un flux de données différé au terminal de lecture et enregistre une heure du flux de données différé actuellement lu, lorsque l'instruction de lecture différée est une instruction de mise en pause ;
le serveur multimédia commence, à une heure enregistrée du flux de données différé actuellement lu, à transmettre un flux de données différé au terminal de lecture par le biais du canal de commande conformément à une vitesse par défaut de l'instruction de retour à balayage rapide/d'avance à balayage rapide ou une vitesse spécifiée dans l'instruction de retour à balayage rapide/d'avance à balayage rapide, lorsque l'instruction de lecture différée est une instruction de retour à balayage rapide/d'avance à balayage rapide ; et
le serveur multimédia arrête la lecture du flux de données différé, positionne une heure de début de lecture du flux de données différé à une heure spécifiée qui est spécifiée dans l'instruction de recherche, lorsque l'instruction de lecture différée est une instruction de recherche.

8. Procédé selon la revendication 7, comprenant en outre :
détermination par le serveur multimédia si un mode différé doit être modifié en un mode en direct ou non ; si le mode différé doit être modifié en le mode en direct, le serveur multimédia commute la lecture différée vers la lecture en direct ; le cas contraire, exécution d'une opération de lecture différée correspondant à l'instruction de lecture différée.

9. Procédé selon la revendication 8, la commutation du serveur multimédia de la lecture différée vers la lecture en direct comprenant :
détermination, par le serveur multimédia, s'il faut utiliser un mode d'unidiffusion ou un mode de multidiffusion ; et s'il faut utiliser un mode d'unidiffusion, le serveur multimédia arrête l'envoi du flux de données différé au terminal de lecture et transfère le flux de données en direct vers le terminal de lecture par le biais du canal de commande ; s'il faut utiliser un mode de multidiffusion, le serveur multimédia arrête l'envoi du flux de données différé au terminal de lecture et le terminal de lecture transmet un message au protocole IGMP (protocole de message de groupe Internet) pour demander à rejoindre un groupe de multidiffusion afin de recevoir le flux de données en direction transmis en mode de multidiffusion.

10. Terminal de lecture, comprenant :
un module de maintien de canal côté abonné, adapté pour établir un canal de commande avec un serveur multimédia et transmettant périodiquement au serveur multimédia un message pour maintenir le canal de commande ; et
un module d'instruction, adapté pour transmettre une instruction de lecture différée au serveur multimédia par le biais du canal de commande établi par le module de maintien de canal côté abonné ;
un module de réception de flux de données, adapté pour recevoir un flux de données différé de la part du serveur multimédia par le biais du canal de commande ; et
un module de lecture, adapté pour lire le flux de données différé reçu par le module de réception de flux de données.

11. Terminal de lecture selon la revendication 10, le module de lecture lisant le flux de données différé comprenant l'une des opérations suivantes :
lecture du flux de données différé dans un mode de lecture normal,
lecture du flux de données différé dans un mode de retour à balayage rapide,
lecture du flux de données différé dans un mode d'avance à balayage rapide,
lecture du flux de données différé dans un mode de mise en pause, et
lecture du flux de données différé dans un mode de recherche.

12. Terminal de lecture selon la revendication 10 ou 11, le module de réception de flux de données étant en outre adapté pour recevoir le flux de données en direct de la part d'une source de programme en direct ; et le module de lecture étant en outre adapté pour lire le flux de données en direct reçu par le module de réception de flux de données dans un mode de lecture normal.

13. Serveur multimédia, comprenant :
un module de maintien de canal côté réseau, adapté pour établir un canal de commande avec un terminal de lecture, recevoir un message indiquant de maintenir le canal de commande en provenance du terminal de lecture et maintenir le canal de commande ; et
un module d'analyse d'instruction, adapté pour recevoir une instruction de lecture différée de la part du terminal de lecture ;
un module d'exécution d'instruction, adapté pour arrêter le transfert des flux de données en direct vers le terminal de lecture en réponse à l'instruction de lecture différée reçue par le module d'analyse d'instruction ; et
un module de transmission de flux de données, adapté pour transmettre un flux de données en direct ou un flux de données différé au terminal de lecture par le biais du canal de commande conformément à une instruction du module d'exécution d'instruction.

14. Serveur multimédia selon la revendication 13,
le module d'analyse d'instruction étant en outre adapté pour analyser l'instruction de lecture différée afin de déterminer une opération de lecture différée correspondant à l'instruction de lecture différée ;
le module d'exécution d'instruction étant en outre adapté pour exécuter l'opération de lecture différée déterminée par le module d'analyse d'instruction.

15. Serveur multimédia selon la revendication 14, l'opération de lecture différée comprenant au moins l'une des opérations suivantes :
une opération d'enregistrement d'une heure du flux de données en direct actuel,
une opération d'ajustement d'une heure de lecture du flux de données différé,
une opération d'ajustement d'une vitesse d'avance à balayage rapide ou d'une vitesse de retour à balayage rapide du flux de données différé,
une opération d'arrêt ou de début de transmission du flux de données différé ou du flux de données en direct, ou
une opération de commutation du flux de données différé vers le flux de données en direct ou inversement.

16. Serveur multimédia selon la revendication 13 ou 14, comprenant en outre l'un des éléments suivants :
un module d'obtention de flux de données, adapté pour effectuer soit la réception du flux de données différé depuis une mémoire, soit la réception du flux de données en direct depuis une source de programme ;
un décodeur vidéo, adapté pour être une source de programme à lecture en direct ; et une mémoire, adaptée pour stocker les données en direct sous la forme d'un fichier multimédia.

17. Système de TV différée, comprenant :
un terminal de lecture selon l'une quelconque des revendications 10 à 12 ;
un serveur multimédia selon l'une quelconque des revendications 13 à 16.

18. Système de TV différée selon la revendication 17, comprenant en outre :
un décodeur vidéo, adapté pour être une source de programme à lecture en direct ; le serveur multimédia étant en outre adapté pour recevoir le flux de données en direct depuis le décodeur vidéo et transférer le flux de données en direct reçu vers le terminal de lecture.

19. Système de TV différée selon la revendication 18, comprenant en outre :
une mémoire destinée à stocker le flux de données en direct sous la forme d'un fichier multimédia ;
le serveur multimédia étant en outre adapté pour lire le fichier multimédia dans la mémoire afin de former un flux de données différé et transmettre le flux de données différé au terminal de lecture.

20. Système de lecture différée selon la revendication 18 ou 19, le décodeur vidéo ou la mémoire étant intégré(e) dans le serveur multimédia.
